Europäisches Patentamt

European Patent Office

Office européen des brevets

(11) Veröffentlichungsnummer: **0 036 584**
**A2**

(12) **EUROPÄISCHE PATENTANMELDUNG**

(21) Anmeldenummer: **81101865.4**

(22) Anmeldetag: **13.03.81**

(51) Int. Cl.³: **C 08 F 8/00,** B 01 J 45/00, C 08 B 15/06

(30) Priorität: **25.03.80 DE 3011393**

(43) Veröffentlichungstag der Anmeldung: **30.09.81** Patentblatt 81/39

(84) Benannte Vertragsstaaten: **DE FR GB**

(71) Anmelder: **RIEDEL-DE HAEN AKTIENGESELLSCHAFT, Wunstorfer Strasse 40, D-3016 Seelze 1 (DE)**

(72) Erfinder: **Lieser, Karl Heinrich, Prof. Dr., Karolinenstrasse 5, D-6104 Seeheim-Jugenheim (DE)**

(74) Vertreter: **Reuter, Johann-Heinrich, Dr. et al, HOECHST AKTIENGESELLSCHAFT Zentrale Patentabteilung Postfach 80 03 20, D-6230 Frankfurt/Main 80 (DE)**

(54) **Chelatbildender Ionenaustauscher auf Basis eines organischen Polymers und Verfahren zu seiner Herstellung.**

(57) Ein chelatbildender Ionenaustauscher ist aufgebaut aus einem als Matrix dienenden organischen Polymer mit nucleophilen Reaktionsgruppen, die jeweils über eine Brückengruppe an eine Verbindung mit chelatbildenden, funktionellen Gruppen (Ankergruppen) gebunden sind. Als Basispolymer ist Cellulose oder ein Polymer einer vinyl-aromatischen Verbindung, z.B. Polystyrol, besonders geeignet; die Reaktionsgruppen des Polymers sind insbesondere Hydroxylgruppen, Mercaptogruppen sowie primäre oder sekundäre Aminogruppen. Die Brückengruppe stammt aus einer heterocyclischen Verbindung, die mindestens ein Stickstoffatom aufweist. Der Ionenaustauscher enthält die Ankergruppen in einer Menge von mindestens 0,2 mmol/g. Er wird zur Gewinnung von Metallen aus stark verdünnten Lösungen eingesetzt.

RIEDEL-DE HAEN AKTIENGESELLSCHAFT   HOE 80/D 009 Dr.EG/a

- 1 -

0036584

Chelatbildender Ionenaustauscher auf Basis eines organischen Polymers und Verfahren zu seiner Herstellung

Die Erfindung bezieht sich auf einen chelatbildenden Ionenaustauscher auf Basis eines organischen Polymers als Matrix und Verfahren zu seiner Herstellung durch chemische Fixierung einer eine chelatbildende Ankergruppe tragenden Verbindung über eine stickstoffhaltige Brückengruppe  an ein organisches Polymer als Matrix.

Chelatbildende Ionenaustauscher auf der Grundlage von polymeren Matrices, z.B. Cellulose und Polystyrol, an denen ein Formazanderivat als funktionelle Gruppe fixiert ist, sind bereits bekannt (vgl. Fresenius Z. Anal. Chem. 295 (1979), Seiten 366 bis 370). Dabei ist der Chelatbildner über Cyanurchlorid (1,3,5-Trichlor-s-triazin) an die Matrix gebunden. Der hierbei verwendete Chelatbildner ist ein Sulfonsäuregruppen und Aminogruppen aufweisendes Formazanderivat, das aus der entsprechenden Nitroverbindung hergestellt werden muß.

Die bekannten Ionenaustauscher zeigen in neutralem Medium eine besondere Affinität zu Hg(II), Pd(II) und Ag(I), aber keine Affinität zu Cu(II); die Kapazitäten der Austauscher liegen zwischen 0,05 mÄ/g  (Cellulose) und 0,6 mÄ/g  (Polystyrol).

Aufgabe der Erfindung ist die Schaffung eines Ionenaustauschers mit einer hochpolymeren Gerüstsubstanz, an die eine Verbindung mit chelatbildenden, funktionellen Gruppen über eine Brückengruppe chemisch gebunden ist.

Die Erfindung betifft nun einen chelatbildenden Ionenaustauscher auf Basis eines organischen Polymers als Matrix und ist dadurch gekennzeichnet, daß das organische Polymer ein Polymer mit nucleophilen Reaktionsgruppen ist, die jeweils über einen zweibindigen, mindestens ein Stickstoffatom aufweisenden, heterocyclischen Rest mit einer Verbindung, die mindestens eine chelatbildende Ankergruppe enthält, verbunden sind und der Gehalt an Ankergruppen mindestens 0,2 mmol/g beträgt.

Die Erfindung betrifft ferner ein Verfahren zur Herstellung eines chelatbildenden Ionenaustauschers durch chemische Fixierung einer Verbindung, die mindestens eine chelatbildende Ankergruppe enthält, über eine stickstoffhaltige Brückengruppe an ein organisches Polymer als Matrix, das dadurch gekennzeichnet ist, daß ein Polymer mit nucleophilen Reaktionsgruppen

a) mit einer mindestens ein Stickstoffatom und mindestens zwei Abgangsgruppen aufweisenden, heterocyclischen Verbindung und das Reaktionsprodukt mit einer Verbindung, in mindestens eine chelatbildende Ankergruppe enthält, umgesetzt wird oder

b) mit einer mindestens ein Stickstoffatom und mindestens zwei Abgangsgruppen aufweisenden, heterocyclischen Verbindung umgesetzt wird, die vorher mit einer Verbindung, die mindestens eine chelatbildende Ankergruppe enthält, umgesetzt worden ist.

Als Matrix für den erfindungsgemäßen Ionenaustauscher dient ein organisches Polymer, das natürlichen Ursprungs oder vorzugsweise synthetisch hergestellt ist und nucleophile Reaktionsgruppen aufweist, die vorzugsweise Hydroxylgruppen, Mercaptogruppen, primäre Aminogruppen oder sekundäre Aminogruppen darstellen. Als Basispolymer sind Cellulose und Polymere von vinylaromatischen Verbindungen besonders geeignet, z.B. Polystyrol, das gegebenenfalls auch vernetzt ist.

Das Basispolymer hat vorzugsweise eine faserige oder kugelförmige Struktur; sein Litergewicht liegt im Bereich von 1,0 bis 1,2 kg, vorzugsweise von 1,05 bis 1,15 kg. Der Partikeldurchmesser des kugelförmigen Basispolymers beträgt 0,05 bis 1,0 mm, vorzugsweise 0,1 bis 0,2 mm. Besonders geeignet ist ein makroporöses Basispolymer, das Poren mit einem Durchmesser von 20 bis 30 nm aufweist. Im Falle eines vernetzten Basispolymers beträgt der Vernetzungsgrad 2 bis 10 Prozent, vorzugsweise 4 bis 8 Prozent.

Die Brücke zwischen der Matrix und dem Ankergruppen tragenden Chelatbildner ist ein zweibindiger heterocyclischer Rest mit mindestens 1, vorzugsweise 2 oder 3 Stickstoffatomen, wobei fünf- oder sechsgliedrige Reste besonders geeignet sind. Die Brücke wird durch eine heterocyclische Verbindung gebildet, die im Ring mindestens ein Stickstoffatom, vorzugsweise 2 oder 3 Stickstoffatome, und mindestens 2, vorzugsweise 2 oder 3 Abgangsgruppen aufweist. Geeignete Brückenverbindungen sind vor allem Fünfringe und - vorzugsweise aromatische- Sechsringe mit Sulfonsäuregrupppen oder Halogenatomen, vorzugsweise Chloratomen, als Abgangsgruppen. Als Beispiele sind zu nennen 3,4-Dichlorpyrrolidin, 3,4-Dichlor-1,2-diazolidin, 4,5-Dichlortriazolidin, 2,5-Dichlorimidazolin, 2,5-Dichlor-pyrrol, Pyrrol-2,5-disulfonsäure, 3,4,5-Trichlor-1,2-diazin, 2,4,6-Trichlor-1,3-diazin, 2,4-Dichlor-1,3-diazin und 2,4,6-Trichlor-1,3,5-triazin.

Der erfindungsgemäße Ionenaustauscher enthält chelatbildende Ankergruppen in einer Menge von mindestens 0,2 mmol/g, vorzugsweise von 0,5 bis 1,5 mmol/g. Als Verbindungen mit chelatbildenden Ankergruppen eignen sich solche, die eine nucleophile Reaktionsgruppe aufweisen, über die die Verknüpfung mit der heterocyclischen Brückenverbindung erfolgt; die Reaktionsgruppe ist vorzugsweise eine Amino- oder Hydroxylgruppe. Beispiele für Verbindungen mit Ankergruppen, die vorzugsweise Aminderivate oder Phenolderivate sind, sind die folgenden Verbindungen:

5-Amino-2-hydroxybenzoesäure

4-Amino-2-hydroxybenzoesäure

3,4-Diaminobenzoesäure

o-Phenylendiamin

Pyrogallol

1,2-Dihydroxybenzol-3,5-disulfosäure (Tiron)

N-Nitroso-p-aminophenylhydroxylamin

4'-Amino-4-hydroxyazobenzol-3-carbonsäure

3,3'-Diaminobenzidin

Bis(aminobenzol)-dithiocarbamat 4-(2-Thiazolylazo)-resorcin

2,3-Diaminonaphthalin

p,p'-Diaminodibenzoylmethan

p-Aminobenzoylaceton

Diphenylthiocarbazon (Dithizon) Diaminodibenzo-18-Krone-6

1-Amino-4-hydroxy-2-methoxyanthrachinon

2,7-Diaminofluoren

Alizarinsulfosäure

3-(o-Arsonophenylazo)-4,5-dihydroxy-2,7-naphthalindisulfosäure (Arsenazo I)

2,7-Bis(o-arsonophenylazo)-1,8-dihydroxynaphthalin-3,6-disulfosäure (Arsenazo III)

1-(2-Thiazolylazo)-4-amino-2-naphthol

2',3,4',5,7-pentahydroxy-2-phenyl-$\gamma$-benzopyron (Morin)

1,2,5,8,9,10-Anthrachinon (Chinalizarin)

1-(2-Pyridylazo)-4-amino-2-naphthol

4,7-Diamino-1,10-phenanthrolin

Triphenyl-aminophenyl-arsoniumchlorid

2-Amino-6-hydroxypyridin

5-Amino-8-hydroxychinolin

3,5-Diamino-2,6-dimethoxypyridin

2,5-Diaminopyridin

2,6-Diaminopyridin

4-Amino-2,6-dihydroxypyrimidin

4-Amino-6-hydroxy-2-mercapto-5-nitrosopyrimidin

4-Amino-6-hydroxy-2-mercaptopyrimidin

4-Amino-6-hydroxypyrazolo(3,4-d)pyrimidin

4,5-Diamino-2,6-dihydroxypyrimidin

4,5-Diamino-6-hydroxy-2-mercaptopyrimidin

2,4-Diamino-6-hydroxypyrimidin

4,5-Diamino-6-hydroxypyrimidin

2,4-Diamino-6-mercaptopyrimidin

4,6-Diamino-2-mercaptopyrimidin

4,6-Diamino-2-(methylmercapto)-pyrimidin

4,5-Diaminopyrimidin

4,6-Diaminopyrimidin

5-Amino-4-benzolazo-3-hydroxypyrazol

2-Aminobenzothiazol

5-Amino-4-cyan-3-cyanmethyl-1-phenylpyrazol

2-Amino-6,8-dihydroxypurin

2-Amino-4-imino-2-thiazolin

2-Amino-5-mercapto-1,3,4-thiadiazol

2-Aminothiazol

3,5-Diamino-1,2,4-triazol

4-Aminophenylmethanphosphonsäurediethylester

Dimethylaminobenzylidenrhodanin

1-Amino-3,4-dihydroxybenzol

1,4-Diamino-anthrachinon-2-sulfonsäure

Oxo-thiazolidin-2-thion (Rhodanin)

1-(2-Hydroxy-1-naphthylazo)-2-naphthol-4-sulfonsäure

6,7-Dihydorxy-5-(2-pyridylazo)-2-naphthalin-sulfonsäure

Das erfindungsgemäße Herstellungsverfahren ist in zwei Varianten durchführbar, die jeweils in zwei Stufen ausgeführt werden. Die Variante a) besteht darin, daß ein Matrix-Polymer zunächst mit einer heterocyclischen Verbindung (Brückenverbindung) und das Reaktionsprodukt dann mit einem Chelatbildner umgesetzt wird. Bei der Variante b) wird zunächst eine heterocyclische Verbindung (Brückenverbindung) mit einem Chelatbildner und das daraus resultierende Produkt mit einem Matrix-Polymer umgesetzt.

Jeweils die erste Verfahrensstufe beider Varianten wird bei niederer Temperatur durchgeführt, insbesondere bei einer Temperatur unterhalb 15°C, vorzugsweise bei einer Temperatur von 0 bis 10°C. Der pH-Wert des Reaktionsmediums liegt üblicherweise im Bereich von 3 bis 7, vorzugsweise von 4 bis 6.

Jeweils die zweite Verfahrensstufe beider Varianten wird bei leicht erhöhter Temperatur durchgeführt, insbesondere bei einer Temperatur von 20 bis 35°C, vorzugsweise von 25 bis 30°C. In dieser Stufe liegt der pH-Wert üblicherweise im Bereich von 7 bis 12, vorzugsweise von 8 bis 10.

Die Einstellung des pH-Wertes erfolgt mit Hilfe einer üblichen anorganischen Base, vorzugsweise eines Alkalihydroxids oder eines basischen Alkalisalzes. Besonders geeignete Basen sind Natriumhydroxid, Kaliumhydroxid, Natriumcarbonat, Natriumhydrogencarbonat, Kaliumcarbonat und Kaliumhydrogencarbonat.

Das erfindungsgemäße Verfahren wird in wäßrigem Medium durchgeführt, das vorzugsweise aus einem Gemisch aus Wasser und einem mit Wasser mischbaren organischen Lösungsmittel, vorzugsweise einem Keton oder Alkanol, besteht. Das Mischungsverhältnis von Wasser zu Lösungsmittel beträgt normalerweise 3:1 bis 1:3 , vorzugsweise 2:1 bis 1:2 . Geeignete Ketone sind beispielsweise Aceton und Methylethylketon; als Alkanol eignet sich z.B. Methanol, Ethanol, Propanol und Isopropanol.

Der erfindungsgemäße Ionenaustauscher ist in technisch einfacher Weise herstellbar. Er eignet sich in üblicher Weise zur Gewinnung von Metallen, insbesondere Schwermetallen, aus stark verdünnten wäßrigen Lösungen, z.B. Abwasser und Meerwasser.

Die folgenden Beispiele dienen zur näheren Erläuterung der Erfindung; Prozent- und Mengenaufgaben beziehen sich jeweils auf das Gewicht, wenn nicht anders angegeben.

0036584

**Beispiel 1**

a) 10 g makroporöses Amino-Polystyrol mit einer Korngröße von 0,1 bis 0,2 mm und einem Litergewicht von 1 kg werden in 100 ml eines Wasser/Aceton-Gemisches (Gewichtsverhältnis 1:1) suspendiert, und die Suspension wird auf eine Temperatur von 0°C gekühlt. In diese Suspension wird eine ebenfalls auf 0°C gekühlte Lösung von 20 g 2,4,6-Trichlor-1,3,5-triazin (TCT) in 200 ml Aceton langsam eingetropft. Der pH-Wert der Suspension wird durch Zutropfen einer 1 M-Natriumcarbonatlösung in einem Wasser/Aceton-Gemisch (1:1) bei 4 gehalten. Die Reaktion ist nach 1 Stunde beendet. Das feste Reaktionsprodukt wird nach Dekantieren der überstehenden Flüssigkeit mehrmals mit einem Wasser/Aceton-Gemisch (1:1) gewaschen.

b) Das nach a) erhaltene Reaktionsprodukt wird in 100 ml eines Wasser/Aceton-Gemisches (1:1) suspendiert, und die Suspension wird mit einer Lösung von 15 g 1-Amino-3,4-dihydroxybenzol in 200 ml eines Wasser/Aceton-Gemisches (1:1) vermischt. Der pH-Wert des Gemisches wird durch Zutropfen einer 1 M-Natriumcarbonatlösung in einem Wasser/Aceton-Gemisch (1:1) bei 8 und die Temperatur auf 20°C gehalten. Nach 30 Minuten ist die Reaktion beendet. Das feste Reaktionsprodukt wird nach Dekantieren der überstehenden Flüssigkeit mehrmals mit einem Wasser/Aceton-Gemisch (1:1) gewaschen. Dann wird das Reaktionsprodukt mit 100 ml einer 1 M-Natriumcarbonatlösung in einem Wasser/Aceton-Gemisch (1:1) vermischt, und das Gemisch wird 60 Minuten lang auf eine Temperatur von 80°C erwärmt. Anschließend wird das Reaktionsprodukt nach Dekantieren der überstehenden Flüssigkeit nochmals gründlich mit einem Wasser/Aceton-Gemisch (1:1) und mit Wasser gewaschen und schließlich getrocknet.

c) Der nach b) erhaltene Ionenaustauscher hat einen Ankergruppengehalt von 1,2 mmol/g. Er ist geeignet für die Abtrennung von Schwermetallionen wie insbesondere $Cu^{2+}$, $Fe^{3+}$ und $Ni^{2+}$ sowie $Sb^{3+}$ aus Lösungen.

Beispiel 2

a) Beispiel 1a) wird wiederholt mit einem makroporösen, aminomethylsubstituierten Polystyrol mit einer Korngröße von 0,1 bis 0,2 mm und einem Litergewicht von 1 kg.

b) Das nach a) erhaltene Reaktionsprodukt wird in 100 ml eines Wasser/Aceton-Gemisches (1:1) suspendiert, und die Suspension wird mit einer Lösung von 30 g 1,4-Diaminoanthrachinon-2-sulfonsäure in 200 g eines Wasser/Aceton-Gemisches (1:1) vermischt. Der pH-Wert des Gemisches wird durch Zutropfen einer 1M-Natriumcarbonatlösung in einem Wasser/Aceton-Gemisch (1:1) bei 8 und die Temperatur bei 25°C gehalten. Nach 30 Minuten ist die Reaktion beendet. Das feste Reaktionsprodukt wird dann analog Beispiel 1b) behandelt.

c) Der nach b) erhaltene Ionenaustauscher hat einen Ankergruppengehalt von 0,8 mmol/g. Er eignet sich besonders für die Abtrennung von $Al^{3+}$, $Ti^{4+}$ und $Zr^{4+}$.

Beispiel 3

a) Beispiel 1a) wird wiederholt.

b) Das nach a) erhaltene Produkt wird in 100 ml eines Wasser/Aceton-Gemisches (1:1) suspendiert, und die Suspension wird mit einer Lösung von 40 g 4-Oxo-thia-zolidin-2-thion(Rhodanin) in 200 ml eines Wasser/Aceton-Gemisches (1:1) vermischt. Der pH-Wert des Gemisches wird durch Zutropfen einer 1M-Natriumhydrogencarbonatlösung in einem Wasser/Aceton-Gemisch (1:1) bei 9 und die Tem-

0036584

peratur bei 20°C gehalten. Nach 30 Minuten ist die Reaktion beendet. Das feste Reaktionsprodukt wird dann analog Beispiel 1b) behandelt.

c) Der nach b) erhaltene Ionenaustauscher hat einen Ankergruppengehalt von 0,7 mmol/g. Er ist geeignet für die Abtrennung von $Ag^+$, $Hg^{2+}$ und $Au^+$ und $Au^{3+}$.

Beispiel 4

a) Beispiel 1a) wird wiederholt.

b) Das nach a) erhaltene Produkt wird in 100 ml eines Wasser/Aceton-Gemisches (1:1) suspendiert, und die Suspension wird bei einer Temperatur von 20°C mit einer Lösung von 40 g des Natriumsalzes von 1-(2-Hydroxy-1-naphthylazo)-2-naphthol-4-sulfonsäure in 400 ml Wasser, die mit Natronlauge ( 4-prozentig) auf pH 10 eingestellt ist, vermischt. Der pH-Wert des Gemisches wird durch Zugabe von Natronlauge ( 4-prozentig) zunächst auf 10 gehalten und 30 Minuten nach Beginn der Reaktion auf 12 gesteigert. Die Temperatur des Reaktionsgemisches wird bei 20°C gehalten. Nach insgesamt 60 Minuten ist die Reaktion beendet. Das feste Reaktionsprodukt wird dann analog Beispiel 1b) behandelt.

c) Der nach b) erhaltene Ionenaustauscher hat einen Ankergruppengehalt von 0,7 mmol/g. Er ist geeignet für die Abtrennung von Schwermetallionen wie insbesondere $Cu^{2+}$, $UO_2^{2+}$, $Fe^{3+}$, $Ni^{2+}$, und $Co^{2+}$.

Beispiel 5

a) Beispiel 1a) wird wiederholt.

b) Das nach a) erhaltene Produkt wird in 100 ml eines Wasser/Aceton-Gemisches (1:1) suspendiert, und die Suspension wird bei einer Temperatur von 20°C mit einer Lösung von 40 g 2',3,4',5,7-Pentahydroxy-2-phenyl-$\gamma$-benzopyron

(Morin) in 400 ml Wasser, die mit Natronlauge (4-prozentig auf pH 10 eingestellt ist, vermischt. Der pH-Wert des Gemisches wird durch Zugabe von Natronlauge ( 4 prozentig) auf 10 gehalten und die Temperatur bei 20°C. Nach 20 Minuten ist die Reaktion beendet. Das feste Reaktionsprodukt wird dann analog Beispiel 1b) behandelt.

c) Der nach b) erhaltene Ionenaustauscher hat einen Ankergruppengehalt von 0,6 mmol/g. Er ist für die Abtrennung von $Ga^{3+}$ $Zn^{2+}$ $Sb^{3+}$, $Sc^{3+}$ $Fe^{3+}$ und $Th^{4+}$ geeignet.

## Beispiel 6

a) Beispiel 1a) wird wiederholt.

b) Das nach a) erhaltene Produkt wird in 100 ml eines Wasser/Aceton-Gemisches (1:1) suspendiert, und die Suspension wird bei einer Temperatur von 20°C innerhalb von 30 Minuten mit einer Lösung von 40 g des Natriumsalzes von 6,7-Dihydroxy-5-(2-pyridylazo)-2-naphthalin-sulfonsäure in 500 ml Wasser vermischt. Der pH-Wert des Gemisches wird durch Zugabe von 1M-Natriumcarbonatlösung bei 10 gehalten. Die Reaktion ist nach 40 Minuten beendet. Das feste Reaktionsprodukt wird dann analog Beispiel 1b) behandelt.

c) Der nach b) erhaltene Ionenaustauscher hat einen Ankergruppengehalt von 0,6 mmol/g. Er ist für die Abtrennung von $Cd^{2+}$, $Cu^{2+}$, $Pb^{2+}$ und $Zn^{2+}$ geeignet.

0036584

Beispiel 7

a) 10 g TCT werden in 100 ml Aceton gelöst und mit einer Lösung von 5,9 g 4-(2-Thiazolylazo)-resorcin in 50 ml Ethanol versetzt, wobei der pH-Wert des Gemisches durch Zugabe von verdünnter Natronlauge (4-prozentig) auf 10 gehalten wird. Die Temperatur der Ausgangslösungen und des Reaktionsgemisches beträgt jeweils 5°C. Die Reaktion ist nach 30 Minuten beendet.

b) Nach Zugabe von 3,6 g handelsüblichem Polystyrol mit einer Korngröße 0,1 bis 0,2 mm und einem Litergewicht von 1,1 kg wird das Reaktionsgemisch auf eine Temperatur von 30°C erwärmt und durch Zugabe von verdünnter Natronlauge (4-prozentig) auf pH 10 gehalten. Danach wird das Gemisch noch 1 Stunde lang auf 60°C erwärmt und dann auf Raumtemperatur abgekühlt. Das feste Reaktionsprodukt wird nach Dekantieren der überstehenden Flüssigkeit zunächst mit Ethanol, dann mit verdünnter Natronlauge (4-prozentig) und schließlich mit Wasser gewaschen und anschließend getrocknet.

c) Der nach b) erhaltene Ionenaustauscher hat einen Ankergruppengehalt von 0,9 mmol/g. Er eignet sich besonders für die Abtrennung von $Th^{4+}$ und $UO_2^{2+}$.

## Patentansprüche:

1. Chelatbildender Ionenaustauscher auf Basis eines organischen Polymers als Matrix, dadurch gekennzeichnet, daß das organische Polymer ein Polymer mit nucleophilen Reaktionsgruppen ist, die jeweils über einen zweibindigen, mindestens ein Stickstoffatom aufweisenden, heterocyclischen Rest mit einer Verbindung, die mindestens eine chelatbildende Ankergruppe enthält, verbunden sind und der Gehalt an Ankergruppen mindestens 0,2 mmol/g beträgt.

2. Ionenaustauscher nach Anspruch 1, dadurch gekennzeichnet, daß das Polymer ein -gegebenenfalls vernetztes- Polymer einer vinylaromatischen Verbindung ist.

3. Ionenaustauscher nach Anspruch 1, dadurch gekennzeichnet, daß der heterocyclische Rest ein fünf- oder sechsgliedriger Rest mit 2 oder 3 Stickstoffatomen im Ring ist.

4. Ionenaustauscher nach Anspruch 1, dadurch gekennzeichnet, daß die Ankergruppenverbindung über eine nucleophile Reaktionsgruppe mit dem heterocyclischen Rest verbunden ist.

5. Verfahren zur Herstellung eines chelatbildenden Ionenaustauschers durch chemische Fixierung einer Verbindung mit einer chelatbildenden Ankergruppe über eine stickstoffhaltige Zwischengruppe an ein organisches Polymer als Matrix, dadurch gekennzeichnet, daß ein Polymer mit nucleophilen Reaktionsgruppen

a) mit einer mindestens ein Stickstoffatom und mindestens zwei Abgangsgruppen aufweisenden, heterocyclischen Verbindung und das Reaktionsprodukt mit einer eine chelatbildende Ankergruppe aufweisenden Verbindung

- 14 -

umgesetzt wird oder

b) mit einer mindestens ein Stickstoffatom und mindestens zwei Abgangsgruppen aufweisenden, heterocyclischen Verbindung umgesetzt wird, die vorher mit einer eine chelatbildende Ankergruppe aufweisenden Verbindung umgesetzt worden ist.

6. Verfahren nach Anspruch 5, dadurch gekennzeichnet, daß als Polymer ein -gegebenenfalls vernetztes- Polymer einer vinylaromatischen Verbindung verwendet wird.

7. Verfahren nach Anspruch 5, dadurch gekennzeichnet, daß als heterocyclische Verbindung eine fünf- oder sechsgliedrige Verbindung mit . 2 oder 3 Stickstoffatomen im Ring verwendet wird.

8. Verfahren nach Anspruch 5, dadurch gekennzeichnet, daß als eine Ankergruppe aufweisende Verbindung ein Aminderivat oder ein Phenolderivat verwendet wird.

9. Verfahren nach Anspruch 5, dadurch gekennzeichnet, daß jeweils die erste Verfahrensstufe der Alternativen a) und b) bei einer Temperatur von unterhalb 15°C und einem pH von 3 bis 7 durchgeführt wird.

10. Verfahren nach Anspruch 5, dadurch gekennzeichnet, daß jeweils die zweite Verfahrensstufe der Alternativen a) und b) bei einer Temperatur von 20 bis 35°C und einem pH von 7 bis 12 durchgeführt wird.